# EUROPEAN PATENT SPECIFICATION

(11) **EP 1 439 116 B1**
(45) Date of publication and mention of the grant of the patent: **18.07.2007**
(21) Application number: 03029673.5
(22) Date of filing: 23.12.2003
(51) Int. Cl.: B62L 3/02, B60T 11/16, B62J 6/16

(54) **Hydraulic master cylinder apparatus for vehicle with bar handle**
Hydraulischer Steuerzylinder für ein Fahrzeug mit Lenker
Maître-cylindre hydraulique pour véhicule avec guidon

(30) Priority: 27.12.2002 JP 2002379948; 03.07.2003 JP 2003190759
(43) Date of publication of application: 21.07.2004
(73) Proprietor: NISSIN KOGYO CO., LTD., Ueda-shi, Nagano-ken (JP)
(72) Inventor: Hatakoshi, Genichi, Nissin Kogyo Co., Ltd., Chiisagata-gun Nagano 389-0514 (JP)
(74) Representative: HOFFMANN EITLE

(56) References cited:
- EP-A- 0 405 945
- DE-U- 20 018 705
- US-A- 4 275 280
- US-A- 4 560 049
- US-A- 4 779 482
- US-A1- 2002 108 801
- PATENT ABSTRACTS OF JAPAN vol. 1999, no. 13, 30 November 1999 (1999-11-30) & JP 11 235992 A (NISSIN KOGYO KK), 31 August 1999 (1999-08-31)
- PATENT ABSTRACTS OF JAPAN vol. 2000, no. 25, 12 April 2001 (2001-04-12) & JP 2001 225783 A (NISSIN KOGYO CO LTD), 21 August 2001 (2001-08-21)
- PATENT ABSTRACTS OF JAPAN vol. 010, no. 051 (M-457), 28 February 1986 (1986-02-28) & JP 60 199755 A (HONDA GIKEN KOGYO KK), 9 October 1985 (1985-10-09)
- PATENT ABSTRACTS OF JAPAN vol. 1995, no. 10, 30 November 1995 (1995-11-30) & JP 07 187047 A (NISSIN KOGYO KK), 25 July 1995 (1995-07-25)

## Description

### BACKGROUND OF THE INVENTION

### 1. Field of the Invention

The present invention relates to a vertical hydraulic master cylinder apparatus for a vehicle with a bar handle in which the center axis of a cylinder body of a master cylinder for fluid pressure operating a clutch or a brake of a vehicle with a bar handle such as a motorcycle is disposed so as to extend in a direction substantially at right angles to a virtual line passing through the center axis of a handlebar, and a piston disposed on the master cylinder is pushed and moved through a push rod.

The present invention relates to a hydraulic master cylinder apparatus for a vehicle with a bar handle in which a hydraulic master cylinder for fluid-pressure operating a brake carried on board a vehicle with a bar handle such as a motorcycle is disposed in the vicinity of a handlebar and, in particular, to a hydraulic master cylinder apparatus for a vehicle with a bar handle in which a stop lamp switch is mounted on a cylinder body.

### 2. Description of the Related Art

As an example of the above-mentioned vertical hydraulic master cylinder apparatus, there is known an apparatus in which a bottomed cylinder hole is formed in a cylinder body of a master cylinder in such a manner that it is opened up in the end face of the cylinder body situatedon the opposite side of a handlebar, a piston is fluid-tight and movably inserted into the present cylinder hole to thereby define a fluid pressure chamber in the bottom portion of the cylinder hole, the base end of an operation lever is pivotally supported by a pivot on a lever mounting portion provided on and extended from the cylinder body, the leading end of a push rod mounted on the operation lever is contacted with the rear end of the piston, and the piston is pushed and moved through the push rod by gripping and operating the operation lever (see the JP-A-7-187047, for example). This vertical hydraulic master cylinder apparatus, when compared with a horizontal hydraulic master cylinder apparatus in which the center axis of the cylinder body is disposed along the center axis of the handlebar, can secure a high lever ratio and thus can provide an excellent operation feeling.

Horizontal hydraulic master cylinders are known from, for example, the document DE 200 18 705 U.

Conventionally, in a horizontal hydraulic master cylinder apparatus in which the center axis of a cylinder body is disposed along the center axis of a handle bar, the handlebar is enclosed and held by and between a bracket half body provided on and projected from the cylinder body and another half-split bracket and these parts are fastened together with bolts and are mounted on the handlebar. An operation lever is pivotally supported by a pivot on a pair of upper and lower lever holders provided on and extended from the cylinder body, a stop lamp switch actuatable with the rotation of this operation lever is mounted on the lower surface of the cylinder body and, with the operation of the stop lamp switch, a stop lamp disposed in the end portion of the vehicle body can be turned on.

Also, in a vertical hydraulic master cylinder apparatus in which the center axis of a cylinder hole is disposed so as face a direction substantially at right angles to a virtual line passing through the center axis of a handle bar, similarly to the horizontal hydraulic master cylinder apparatus, a handle bar is enclosed and held by a half-body bracket provided on and projected from a cylinder body and another half-divisional-body bracket, and these parts are fastened together using a bolt and are thereby mounted on the handle bar. An operation lever is pivotally supported by a pivot on a pair of upper and lower lever holders provided on and extended from the cylinder body and, between the operation lever and a piston stored in a cylinder hole, there is interposed a push rod. A union boss portion having a union hole opened up therein is provided on and projected from the lower surface of the cylinder body and, to this unionboss portion, there is connected a brake hose which is coupled to a brake device. Document JP-A-2001-180559 is an example of a vertical hydraulic master cylinder apparatus according to the preamble of claim 1. Since this vertical hydraulic master cylinder apparatus can secure a high lever ratio when compared with the horizontal hydraulic master cylinder apparatus in which the center axis of the cylinder body is disposed along the center axis of the handlebar, it can provide an excellent operation feeling and is often carried on board a motorcycle for a race use with no special need for provision of a stop lamp switch.

However, according to the above-mentioned structure, since the grip margin adjust mechanism of the operation lever is based on the threadedmovement of the push rod which is disposed on the operation lever in such a manner that it can be threadedly moved, in case where the push rod is threadedly moved to thereby change the grip margin of the operation lever, the distance between the cylinder body and operation lever is changed, which makes it impossible toprovide amechanical-type stop lamp switch for operating the stop lamp; and, therefore, the present structure is not suitable for the running of the vehicle on the public road.

However, in the above-mentioned horizontal hydraulic master cylinder apparatus, in case where the union boss portion is disposed in the lower surface of the cylinder body, the mounting space for mounting the stop lamp switch is limited by this union boss portion and thus the mounting positions of the union boss portion and stop lamp switch are caused to be nearer to each other, which sometimes makes it difficult for wires to be arranged on connectors disposed in a stop lamp switch disposed thereon. Also, since the half-body bracket disposed on the cylinder body is fastened using the bolts, it is formed so as to have a large thickness, there is a fear that the large-thickness bracket half body can interfere with the wires to be connected to the connector of the stop lamp switch.

On the other hand, in the case of the above secondly mentioned vertical hydraulic master cylinder apparatus, in recent years, it has been carried on board a motorcycle which runs on a public road, which raises the need to provide a stop lamp switch in this vertical hydraulic master cylinder apparatus as well. In the vertical hydraulic master cylinder apparatus, when compared with the horizontal hydraulic master cylinder apparatus, the union boss portion to be formed in the lower surface of the cylinder body as well as the mounting bracket greatly limit the mounting space for mounting the stop lamp switch, which makes it difficult for the wires to be connected to the connectors of the stop lamp switch.

In the document JP 07-187047 A, another vertical hydraulic master cylinder apparatus is described. The device described in this document includes an operation lever connected to a push rod which also functions as an adjust mechanism via a collar in a screwed manner. When the position of the lever is changed, the entire lever is moved.

### SUMMARY OF THE INVENTION

Accordingly, it is an object of the present invention to provide a hydraulic master cylinder apparatus for a vehicle with a bar handle in which a stop lamp switch can be mounted on a vertical master cylinder capable of pushing and moving a piston through a push rod.

In attaining the above object, according to a first aspect of the present invention, there is provided a vertical hydraulic master cylinder apparatus as defined in claim 1.

The dependent claims define preferred embodiments of the invention.

### BRIEF DESCRIPTION OF THE DRAWINGSA

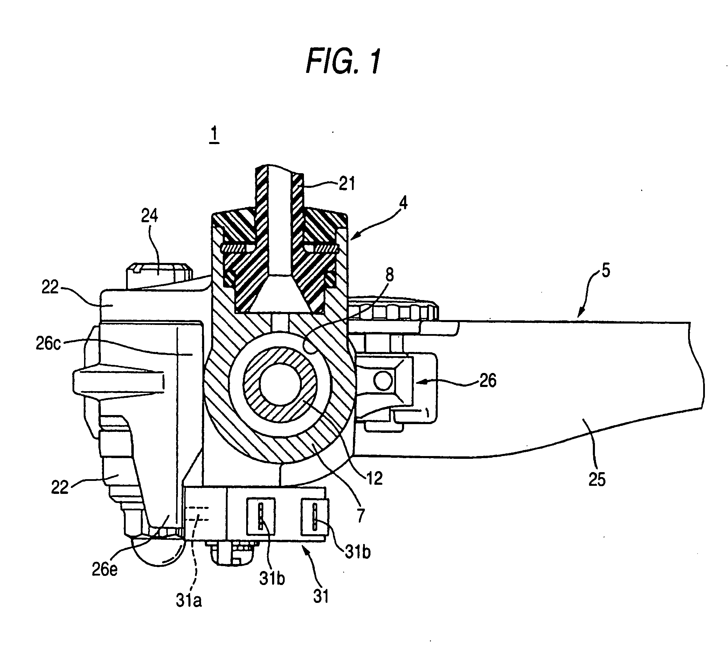

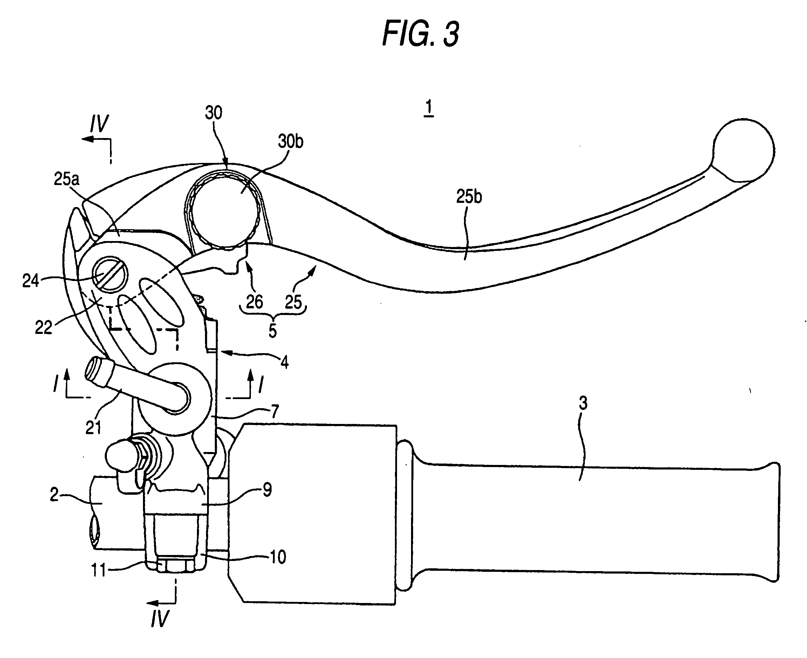

Fig. 1 is a section view, taken along the line I-I shown in Fig. 3;

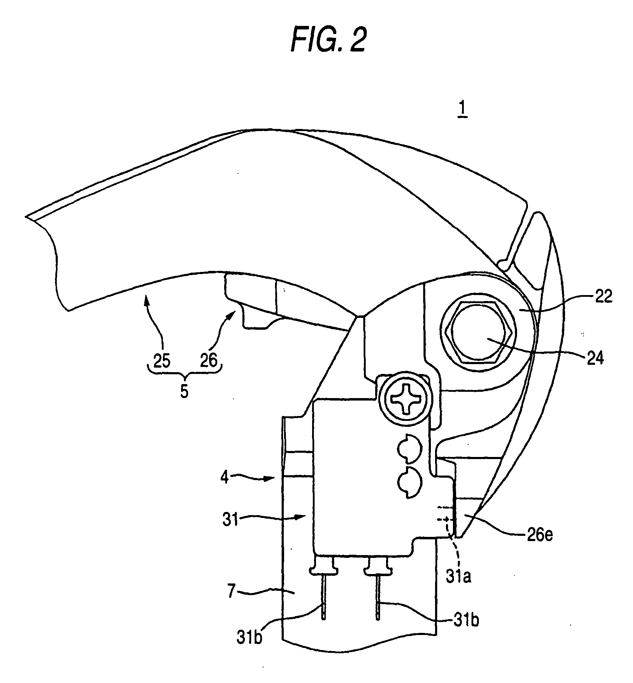

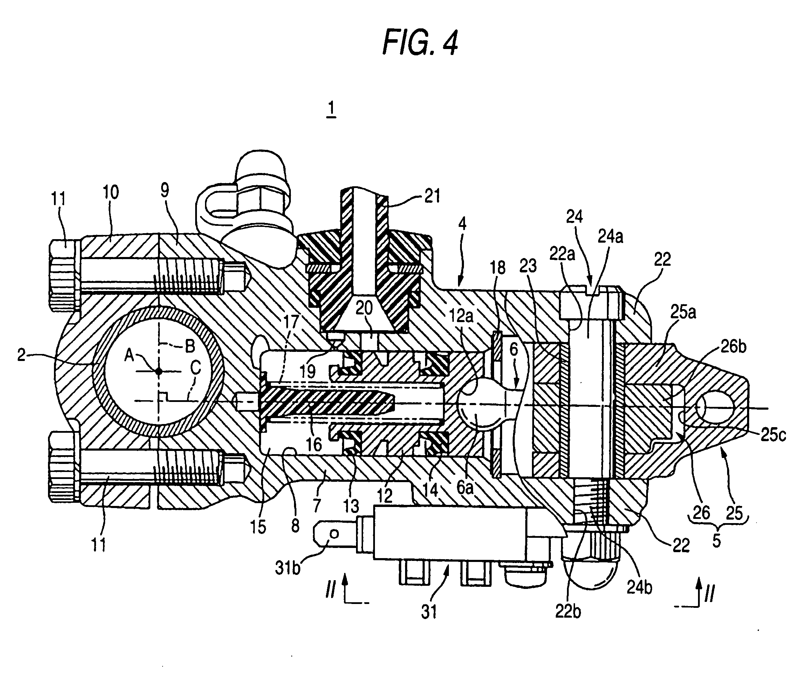

Fig. 2 is a view, taken along the arrow mark II-II shown in Fig. 4;
Fig. 3 is a plan view of a hydraulic master cylinder apparatus;
Fig. 4 is a view, taken along the arrow mark IV-IV shown in Fig. 3;
Fig. 5 is a sectional plan view of a fluid pressure;

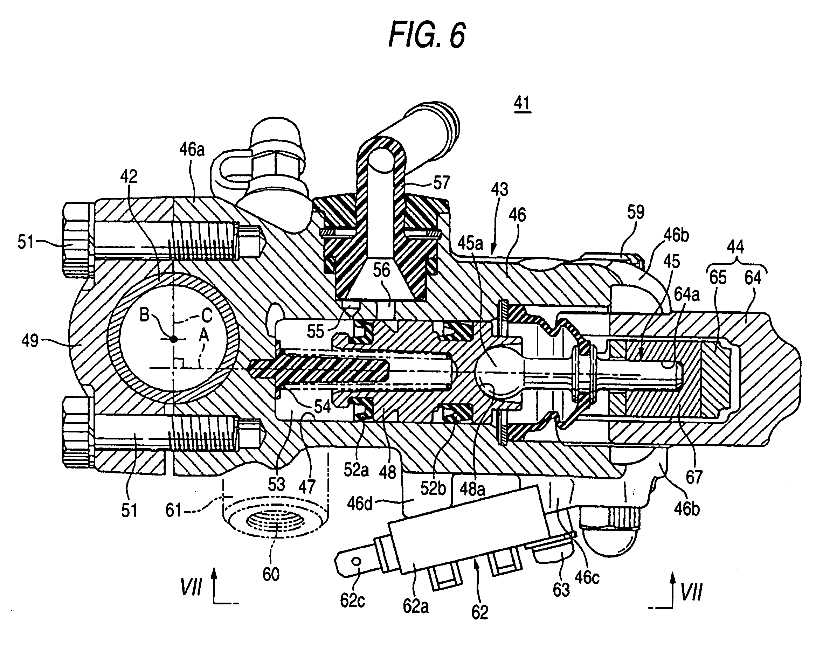

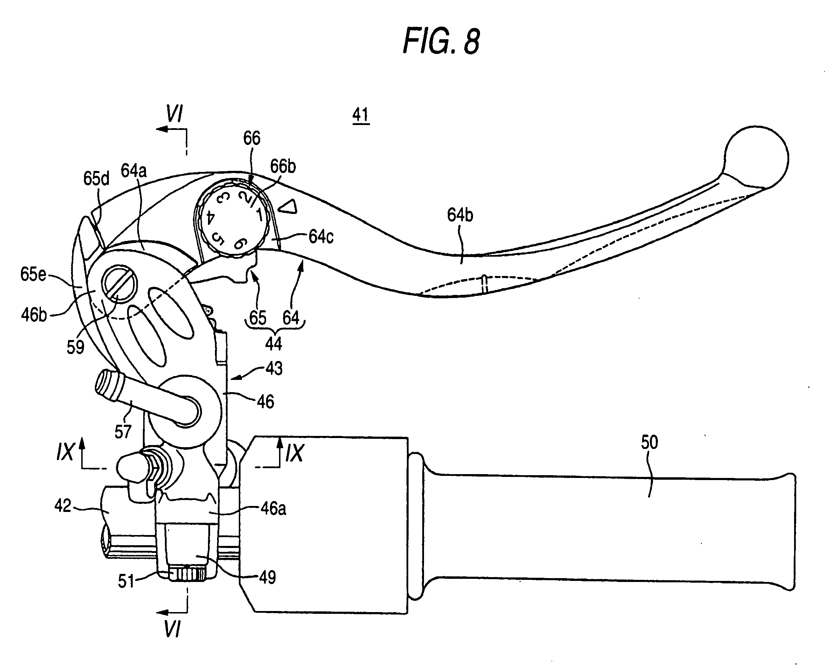

Fig. 6 is a section view taken along the line VI-VI shown in Fig. 8;

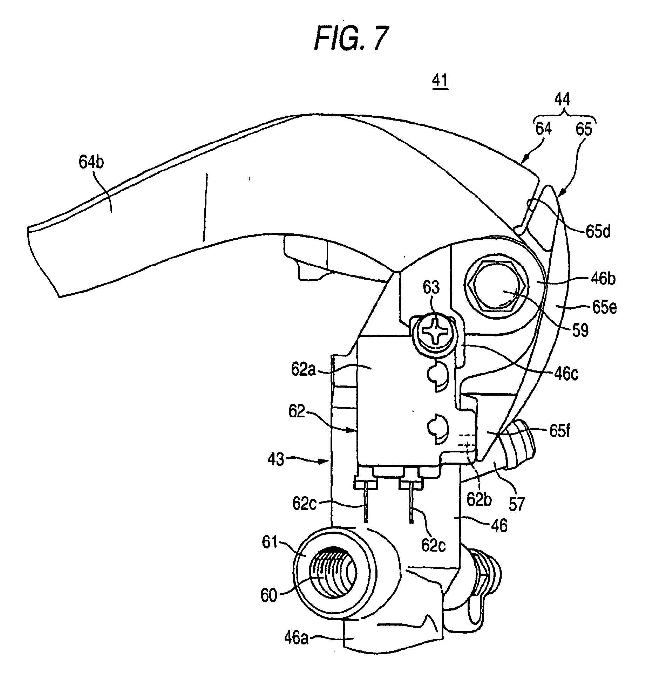

Fig. 7 is a view taken along the arrow mark VII-VII shown in Fig. 6;
Fig. 8 a front view of a hydraulicmaster cylinder apparatus according to an embodiment of the present invention;

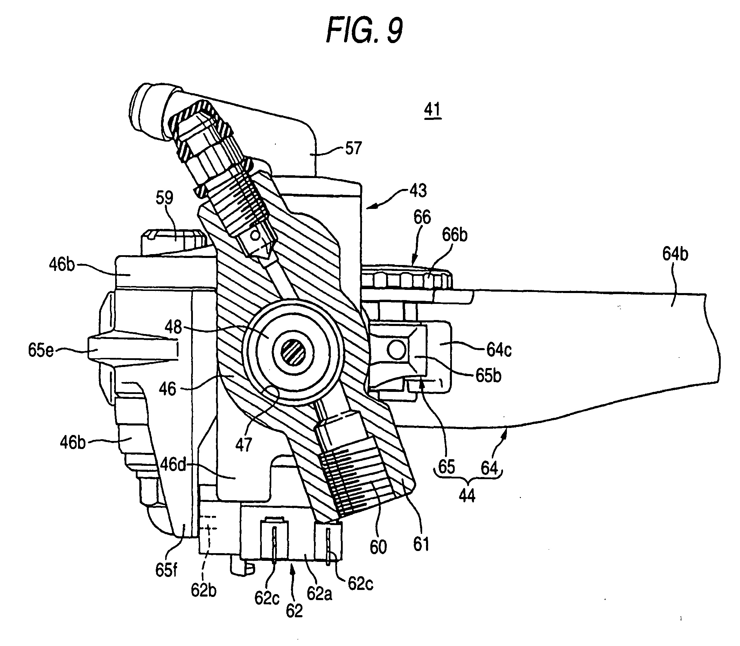

Fig. 9 is a section view taken along the line IX-IX shown in Fig. 8; and,

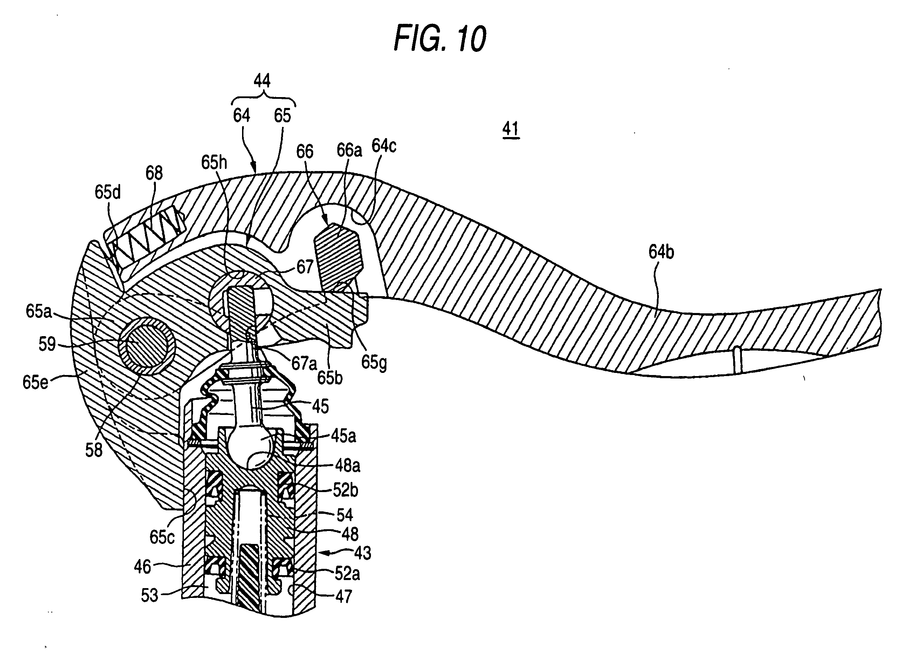

Fig. 10 is a section view of a hydraulic master cylinder apparatus according to an embodiment of the present invention.

### DETAILED DESCRIPTION OF THE PREFERRED EMBODIMENTS

Now, description will be given below of an embodiment in which the present invention is applied to a front brake hydraulic master cylinder apparatus for a vehicle with a bar handle with reference to the accompanying drawings- This hydraulic master cylinder apparatus 1 comprises a hydraulic master cylinder 4 to be mounted in the vicinity of an accelerator grip 3 of a handlebar 2 disposed on the front portion of a vehicle body for steering a front wheel (not shown) in the front portion of a vehicle body, an operation lever 5 to be additionally attached to this hydraulic master cylinder 4, and a push rod 6 to be interposed between these two parts.

The hydraulic master cylinder 4 is a vertical master cylinder in which the center axis C of a cylinder body 7 is disposed so as to extend in a direction substantially at right angles to the virtual line B passing through the center axis A of the handlebar 2. In the cylinder body 7, there is opened up a bottomed cylinder hole 8 opened on the vehicle body front portion side, the portion of the handle bar 2 existing in the vicinity of the accelerator grip 3 is enclosed and held by a half-body bracket 9 formed on the bottom portion side of the cylinder hole 8 integrally with the cylinder body 7 and a separately produced half-divisional-body bracket 10, the two brackets 9, 10 are fastened together by bolts 11, 11; and, in this state, the hydraulic master cylinder 4 is mounted on the vehicle body front portion side of the handlebar 2.

Into the cylinder hole 8, there is fluid-tight and movably inserted a piston 12 in such a manner that a primary cup 13 and a secondary cup 14 are fitted with the outer surfaces of the piston 12, while a fluid pressure chamber 15 is defined between the piston 12 and the bottom wall of the cylinder hole 8. Between the bottom wall of the cylinder hole 8 and piston 12, there is compressedly interposed a return spring 17 which is fitted with the outer surface of a spring support member 16, the piston 12 is always energized in the opening direction of the cylinder hole 8 due to the resilient force of the return spring 17, and the retreating limit of the piston 12 in its non-operation time is restricted by its contact with the leading end portion 6a of the push rod 6. In the opening of the cylinder hole.8, there is mounted a piston removal prevention ring 18 with a small distance from the rear end face of the piston 12 the retreating limit of which is restricted by the leading end portion 6a of the push rod 6.

In the upper wall of the cylinder body 7, there are formed a relief port 19 and a supply port 20 in communication with the cylinderhole 8 and, on the two ports 19, 20, there is disposed a connector 21 to which a hose of a reservoir (not shown) can be connected, whereby an operation fluid is allowed to flow between the cylinder hole 8 and reservoir.

On the vehicle body inside wall of the cylinder body 7, there are projectingly provided a pair of upper and lower lever holders 22, 22 with a given clearance between them and, on these lever holders 22, 22, there is rotatably mounted the operation lever 5 by a collar 23 and a pivot 24. The pivot 24 includes a shaft portion 24a and a male screw portion 24b formed downwardly of the shaft portion 24a; and, in the upper-side lever holder 22, there is formed an insertion hole 22a for the shaft portion 24a and, in the lower-side lever holder 22, there is formed a female screw portion 22b which can be threadedly engaged with the male screw portion 24b.

The operation lever 5 is a two-piece-type lever which is composed of a lever main body 25 disposed forwardly of the accelerator grip 3 with respect to the vehicle body and a knocker 26 interposed between the cylinder body 7 and the interior of the present lever.main body 25. The lever main body 25 includes a rotation base portion 25a rotatably supported on the lever holders 22, 22 by the pivot 24 and a grip operation portion 25b disposed substantially forwardly of the accelerator grip 3 with respect to the vehicle body; and, in the rotation base portion 25a, there are formed a storage recessed portion 25c for storing the knocker 26 therein and a recessed portion 25d formed in the surface of the knocker 26 that is opposed to the operation arm 26a in such a manner that it is continuous with the storage recessed portion 25c.

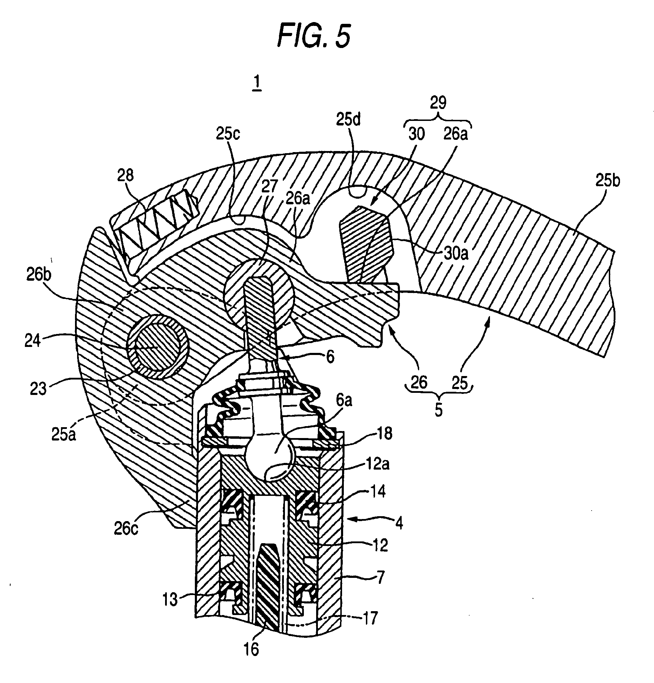

The knocker 26 includes the above-mentioned operation arm 26a, a rotation base portion 26a rotatably supported by the pivot 24, and a stopper 26c disposed in such a manner that it is curved from the rotation base portion 26b substantially at an angle of 90° in the opposite direction of the operation arm 26a. A cylindrical-shaped piece member 27 is rotatably mounted on the operation arm 26a, the base end of the push rod 6 is inserted into the piece member 27, and the leading end portion 6a of the push rod 6 is rotatably contacted with an engaging hole 12a formed in the rear end of the piston 12. Also, the stopper 26c can be contacted with the vehicle body inside wall of the cylinder body 7 to thereby restrict the retreating limit of the knocker 26 in its no-operation time which can be rotated counterclockwise (in Fig. 5) due to the resilient force of the return spring 17 disposed within the cylinder hole 8. Further, between the stopper 26c and the rotation base portion 25a of the lever main body 25, there is interposed a spring 28 in a compressed state which allows the rotation of the lever main body 25 in the grip margin adjusting time.

Between the operation arm 26a and the recessed portion 25d of the lever main body 25, there is interposed a grip margin adjust mechanism 29. This grip margin adjust mechanism 29 is composed of an adjuster 30 rotatably disposed on the recessed portion 25d of the lever main body 25 and the contact surface 26d of the knocker 26 with which a cam portion 30a formed in the leading end portion of the adjuster 30 can be contacted. The adjuster 30 includes two or more cam surfaces (in the present embodiment, six cam surfaces) which are set in the cam portion 30a of the leading end portion thereof in such a manner that they are unequal in distance from the center of the axis thereof; and, the adjuster 30 is structured such that, in case where a dial 30b disposed on the upper surface of the lever main body 25 is rotated to thereby selectively contact any one of the cam surfaces with the contact surface 26d of the knocker 26, a grip margin to be set between the accelerator grip 3 and the grip operation portion 25b of the lever main body 25 can be adjusted, that is, expanded and contracted.

Referring to the specific adjustment of this grip margin, firstly, the lever main body 25 is previously rotated counterclockwise (in Fig. 5) against the resilient force of the spring 28 and, after then, the dial 30b is operated or turned to thereby select the cam surface to be contacted with the contact surface 26d of the knocker 26. And, in case where the counterclockwise rotation of the lever main body 25 is removed, the lever main body 25 is rotated clockwise (in Fig. 5) due to the resilient force of the spring 28 to thereby change the clearance of the grip operation portion 25b with respect to the accelerator grip 3, so that the grip margin of the lever main body 25 can be set.

On the lower side wall of the cylinder body 7, there is disposed a stop lamp switch 31. This stop lamp switch 31 is used to turn on a stop lamp (not shown) in the grip operation time (braking time) of the operation lever 5; and, in the stop lamp switch 31, there is included an operation piece 31a in such a manner that it can be projected from the wall surface of the switch body inwardly of the vehicle body by a spring (not shown) incorporated in the stop lamp switch 31. The present operationpiece 31a is structured such that, when it is projected from the wall surface, it turns on the stop lamp and, when it is pushed into the wall surface, it turns off the stop lamp. By the way, reference characters 31b, 31b designate connectors for energizing the stop lamp.

In the case of knocker 26, a switch press portion 26e for pressing and moving the operation piece 31a is integrally disposed on and extended from the lower portion of the stopper 26c and, in the no-braking time (a state in which the gripping operation of the operation lever 5 is removed) in which the stopper 26c is contacted with the vehicle inner wall of the cylinder body 7 to thereby restrict the retreating limit of the knocker 26, the switchpress portion 26e pushes the operation piece 31a into the wall surface of the stop lamp switch 31, thereby turning off the stop lamp.

By the way, because the extended provision of the switch press portion 26e from the stopper 26c for restricting the retreating limit of the knocker 26 makes it possible for the stopper 26c to restrict the retreating limit of the piston 12 through the push rod 6, the piston removal prevention ring 18 can be made free from any load.

And, in the braking time, with the gripping operation of the grip operation portion 25b, the knocker 26 is rotated clockwise (in Fig. 5) about the pivot 24 through the grip margin adjust mechanism 29 and the operation arm 26a pushes and moves the piston 12 through the push rod 6; and, at the same time, the switch press portion 26e is separated from the wall surface of the stop lamp switch 31 and the operation piece 31a is projected from the wall surface of the stop lamp switch 31, thereby turning on the stop lamp.

Also, in the grip margin adjusting time for changing the clearance of the grip operation portion 25b of the lever main body 25 with respect to the accelerator grip 3, the knocker 26 is energized counterclockwise (in Fig. 5) due to the resilient force of the return spring 17 and also the contact of the stopper 26c with the vehicle body inner wall of the cylinder body 7 restricts the retreating limit of the knocker 26 to thereby prevent the knocker 26 from rotating clockwise (in Fig. 5). Therefore, the switch press portion 26e maintains a state in which the operation piece 31a is pushed into the wall surface of the stop lamp switch 31, whereby the stop lamp remains off.

And, in case where, after the grip margin is adjusted, the lever main body 25 is gripped and operated, similarly to the above-mentioned brake time, the knocker 26 is rotated clockwise (in Fig. 5) and the operation arm 26a pushes and moves the piston 12; and, at the same time, the switch press portion 26e is separated from the wall surface of the stop lamp switch 31 and the operation piece 31a is projected from the wall surface of the stop lamp switch 31 to thereby turn on the stop lamp. In this manner, regardless of the grip margin adjustment, the mechanical-type stop lamp switch 31 for actuating the stop lamp can be operated positively.

Now, description will be given below in detail of an embodiment of a hydraulic master cylinder apparatus according to the present invention with reference to the accompanying drawings. A hydraulic master cylinder apparatus 41 according to the present embodiment comprises a hydraulic master cylinder 43 to be mounted on a handlebar 42 for steering a front wheel (not shown) disposed in the front portion of a vehicle body, an operation lever 44 additionally attached to the hydraulic master cylinder 43, and a push rod 45 interposed between these parts.

The hydraulic master cylinder 43 is a vertical master cylinder structured such that a cylinder body 46 has a bottomed cylinder hole 47 opened up so as to open on the vehicle front portion side and the center axis A of the cylinder hole 47 is set so as to extend in a direction substantially at right angles to a virtual line C passing through the center axis B of the handlebar 42; and, into the cylinder hole 47, there is fitted a piston 48. In this hydraulic master cylinder 43, a bracket half body 46a formed integral with the cylinder body 46 and a separately produced half-divisional-body bracket 49 cooperate together in enclosing and holding the end portion of the handlebar 42 situated in the vicinity of an accelerator grip 50, and these parts are fastened together using bolts 51, 51; and thus, the hydraulic master cylinder 43 is mounted on the vehicle body front portion side of the handlebar 42.

The above piston 48 is fitted into the cylinder hole 47 fluid-tight and movably using a primary cup 52a and a secondary cup 52b and thus, between the piston 48 and the bottom wall of the cylinder hole 47, there is defined a fluid pressure chamber 53. Between the bottom wall of the cylinder hole 47 and piston 48, there is interposed a return spring 54 in a compressed manner; and, the piston 48 is always energized in the opening direction of the cylinder hole 47 due to the resilent force of the return spring 54. Also, the retreating limit of the piston 48 in the no-operation time thereof is restricted by the push rod 45.

And, a relief port 55 and a supply port 56 are formed in the upper wall of the cylinder body 46 in such a manner that the ports 55 and 56 are in communication with the cylinder hole 47. The two ports 55, 56 are respectively connected from a connecting portion 57 through a hose to a reservoir (not shown), so that an operation fluid is allowed to flowbetween the cylinder hole 47 and reservoir. On the front end of the cylinder body 46, there are projectingly disposed a pair of upper and lower lever holders 46b, 46b with a given clearance between them; and, the operation lever 44 is rotatably mounted on these lever holders 46b, 46b using a collar 58 and a pivot 59. On the lower surface of the cylinder body 46 that is situated near to the handlebar 42, there is projectingly disposed a union boss portion 61 having a union hole 60 in communication with the fluid pressure chamber 53; and, on the lower surface thereof that is situated near to the pivot 59, there is mounted a stop lamp switch 62.

The stop lamp switch 62 is used to turn on a stop lamp disposed on the rear end portion of the vehicle body in the gripping operation time (braking time) of the operation lever 44. And, the stop lamp switch 62 is structured in the following manner: that is, an operation piece 62b incorporated in a switch body 62a of the stop lamp switch 62 can be projected by a spring (not shown) inwardly of the vehicle body from the vehicle body inner wall of the switch body 62a, when the operation piece 62b is projected out from the vehicle body inner wall, the stop lamp turns on and, when the operation piece 62b is pushed into the vehicle inner wall, the stop lamp is turned off. Also, on one end wall of the switch body 62a that is opposed to the handlebar 42, there are projectingly provided connectors 62c, 62c which are used to energize the stop lamp. In the case of this stop lamp switch 62, the other end wall side of the switch body 62a, which is situated near to the pivot 59, is bolted to a mounting bracket 6c provided on the lower surface of the cylinder body 46; and, the one-end-wall-side switch body 62a including the connectors 62c, 62c are supported by a support piece 6d projecting from the cylinder body 46 downwardly of the vehicle body and the one-end-wall-side switch body 62a is mounted in such a manner that it is inclined downwardly of the vehicle body with respect to the center axis A of the cylinder hole.

The operation lever 44 is a two-piece type lever which is divided into a lever main body 64 to be disposed forwardly of the accelerator grip with respect to the vehicle body and a knocker 65 for pressing and moving the push rod 45, while a grip margin adjust mechanism 66 is interposed between the lever main body 64 and knocker 65.

The lever main body 64 includes a rotation base portion 64a rotatably supported between the lever holders 46b, 46b by the above pivot 59, a grip operation portion 64b to be disposed substantially forwardly of the accelerator grip 50 with respect to the vehicle body, and a recessed portion 64c for disposing the grip margin adjust mechanism 66 therein. The rotation base portion 64a includes plate-shaped upper and lower arms which are spaced apart from each other in a vertically forked manner and, in these two arms, there are coaxially formed pivot insertion holes into which the pivot 59 can be inserted.

The knocker 65 is disposed in such a manner that it is sandwiched between the upper and lower arms of the lever main body 64. The knocker 65 includes a rotation base portion 65a rotatably supported on the pivot 59, an operation arm 65b extended from the rotation base portion 65a toward the leading end side of the lever main body, a hydraulic master cylinder side stopper piece 65c for restricting the rotation quantity of the hydraulic master cylinder 43 side of the knocker 65, a lever main body side stopper piece 65d for restricting the rotation quantity of the lever main body 64 side of the knocker 65, a reinforcing rib 65e for connecting together the two stopper pieces 65c, 65d on the outer surface of the knocker 65, and a switch press portion 65f extended from the lower surface of the hydraulic master cylinder side stopper piece 65c for pressing the operation piece 62b of the stop lamp switch 62.

In the rotation base portion 64a of the knocker 65, there is opened up a.pivot insertion hole into which the pivot 59 can be inserted through the collar 58. Also, the operation arm 65b includes an adjust cam surface 65g opposed to the recessed portion 64c of the lever main body 64, and a circular-shaped boss hole 65h opposed to the opening of the cylinder hole 47. In the boss hole 65h, there is rotatably mounted a cylindrical-shaped piece member 67 and, in this piece member 67, there is recessedly formed a mounting hole 67a for mounting the push rod 45.

The grip margin adjust mechanism 66 comprises an adjust pin which includes a cam shaft portion 66a to be inserted into the recessed portion 64c of the lever main body 64 and an operation dial 66b to be disposed on the upper surface of the lever main body 64; and, in the cam shaft portion 66a, there are formed two or more cam surfaces which are set unequal in distance from the center axis of the cam shaft portion 66a. This grip margin adjust mechanism 66 is structured such that, in case where the operation dial 66b is operated and rotated to thereby selectively bring any one of the two or more cam surfaces into contact with the adjust cam contact surface 65g of the knocker 65, a grip margin to be set between the accelerator grip 50 and the grip operation portion 64b of the lever main body 64 can be adjusted, that is, can be enlarged and reduced.

Also, between the lever main body side stopper piece 65d and the leading end portion of the rotation base portion 64a of the lever main body 64, there is interposed a spring 68 in a compressedmanner and thus, even when the camsurface in contact with the adjust cam contact surface 65g is selected arbitrarily, the cam surface can be always pressure contacted with the adjust cam contact surface 65g due to the resilient force of this spring 68, thereby being able to prevent the lever main body 64 from shaking.

The lever main body 64 and knocker 65 may be assembled provisionally as the operation lever 44 in the following manner : that is, before the lever main body 64 and knocker 65 are mounted onto the lever holders 46b, 46b, the rotation base portion 65a of the knocker 65 is inserted into between the upper and lower arms of the rotation base portion 64a of the lever main body 64, the pivot insertion holes of the two rotation base portions 64a, 65a are matched in position to each other, and then collar 58 is inserted. In this state, the rotation base portions 64a, 65a of the lever main body 64 and knocker 65 are inserted into between the lever holders 46b, 46b, the insertion holes and female screw holes of the collar 58 and lever holders 46b, 46b are matched in position to each other, and the pivot 59 is inserted through and mounted on them from the upwardly situated lever holder 46b side, whereby the lever main body 64 and knocker 65 are supported in such a manner that they can be rotated about the pivot 59.

Between thus-mounted operation lever 44 and the piston 48 of the hydraulic master cylinder 43, there is interposed the above-mentioned push rod 45. The push rod 45 includes a spherical-shaped portion 45a in the leading end of the shaft portion thereof; and, to mount or interpose the push rod 45, the spherical-shaped portion 45a may be rotatably engaged into a semi-spherical-shaped engaging portion 8a formed in the rear end portion of the piston 48 and, at the same time, the shaft portion of the push rod 45 may be fitted into the mounting hole 67a of the piece member 67 mounted on the knocker 65.

To the operation lever 44 mounted on the hydraulic master cylinder 43 in this manner, there is always applied the resilient force of a return spring 54 within the fluid pressure chamber 53 through the piston 48 and push rod 45. The position of the operation lever 44 when not in operation is set by not only the mutual contact between the hydraulic master cylinder side stopper piece 65c of the knocker 65 and one side wall of the cylinder body 46 but also the cam surface selected by the grip margin adjust mechanism 66; and, a given grip margin is formed between the accelerator grip 50 and the grip operation portion 64b of the lever main body 64. Also, a switch press portion 65f formed in the knocker 65 maintains a state in which the operation piece 62b of the stop lamp switch 62 is pushed into the switch body 62a, thereby turning off the stop lamp.

When the vehicle with the bar handle is running, in case where a rider grips and operates the operation lever 44, the lever main body 64 and knocker 65 are integrally rotated in an operation direction (in the accelerator grip 50 direction) with the pivot 59 as the fulcrum thereof, the operation arm 65b of the knocker 65 pushes and moves the push rod 45 through the piece member 67, and the push rod 45 pushes the piston 48 in the bottom direction of the cylinder hole 47. Due to this, the operation fluid of the fluid pressure chamber 53 rises in pressure and is supplied to a front brake, thereby braking a front wheel. And, at the then time, the switch press portion 65f is separated from the wall surface of the switch body 62a of the stop lamp switch 62 and the operationpiece 62b is projected from the switch body 62a, thereby turning on the stop lamp.

Also, in the grip margin adjusting time for changing the interval of the grip operation portion 64b of the lever main body 64 with respect to the accelerator grip 50, the knocker 65 is energized by the resilient force of the spring 68 and the contact between the hydraulic master cylinder side stopper piece 65c and one side wall of the cylinder body 46 restricts the retreating limit of the knocker 65 to thereby prevent the knocker 65 against rotation; and, therefore, the switch press portion 65f maintains the state in which the operation piece 62b is pushed into the wall surface of the stop lamp switch 62, whereby the stop lamp is turned off. And, in case where the lever main body 64 is gripped and operated after the grip margin adjustment, similarly to the above-mentioned braking time, not only the knocker 65 is rotated and thus the operation arm 65b presses the piston 48, but also the switch press portion 65f is separated from the switch body wall surface of the stop lamp switch 62, so that the operation piece 62b is projected from the switch body wall surface of the stop lamp switch 62 to thereby turn on the stop lamp.

Further, according to the stop lamp switch 62, the one-end-wall-side switch body 62a thereof including connectors 62c, 62c is mounted in such a manner that it is inclined downwardly of the vehicle body with respect to the center axis A of the cylinder hole, and the projecting ends of the connectors 62c, 62c face downwardly of the vehicle body; and, therefore, although the stop lamp switch 62 and union boss portion 61 are situated adj acent to each other, the unionboss portion 61 can beprevented from projecting onto the extensions of the connectors 62c, 62c, so that wires to be connected to the connectors 62c, 62c can be arranged properly.

By the way, even in case where a handlebar mounting bracket half body projectingly provided on the cylinder body is disposed in the vicinity of the stop lamp switch, by mounting the stop lamp switch in the above-mentioned manner, the bracket half body can be prevented from projecting onto the extensions of the connectors, thereby being able to realize the proper arrangement of the wire to be connected to the connectors. Also, the hydraulic master cylinder apparatus according to the present invention is not limited to the above-mentioned embodiment in which the operation lever is divided into the lever main body and knocker, but it also can employ a structure in which it uses an integrally formed operation lever.

As has been described heretofore, according to a vertical master cylinder including a grip margin adjust mechanism according to the present invention, since the knocker is prevented against rotation except for the braking operation time, the stop lamp switch actuatable through the rotation of the knocker can be mounted and thus, while maintaining an excellent operation feeling, the present invention can be applied to the public road running of the vehicle with the bar handle. Also, since the switch press portion of the stop lamp is provided on and extended from the stopper for restricting the retreating limit of the knocker, the retreating limit of the piston can be restricted by the stopper through the push rod. Therefore, no load can be applied to the piston removal prevention ring.

As has been described heretofore, according to the present invention, not only a stop lamp switch can be mounted on a hydraulic master cylinder apparatus of any type with a simple structure but also wires can be arranged to the connectors of the stop lamp switch properly.

## Claims

1. A vertical hydraulic master cylinder apparatus for a vehicle with a handlebar (2) comprising:
a master cylinder (4, 43) having a cylinder body (7, 46) comprising a cylinder hole (8, 47), the cylinder body (7, 46) having the center axis (C), wherein the cylinder body is to be disposed so that the center axis (C) extends in a direction substantially at right angles to a virtual line (B) passing through the center axis (A) of the handlebar (2, 42);
an operation lever (5, 44) pivotally supported on the cylinder body (7, 46) by a pivot (24, 59);
a push rod (6, 45) interposed between the operation lever (5, 44) and a piston (12, 48) provided on the master cylinder (4, 43), the operation lever (5, 44) being divided into a lever main body (25, 64) pivotally supported on the pivot (24, 59) and to be disposed on the out-side of a grip (3, 50) mounted on the end portion of the handlebar (2, 42) with respect to a vehicle body, and a knocker (26, 65) interposed between the lever main body (25, 64) and the cylinder body (7, 46) and rotatable around the pivot (24, 59) due to the gripping operation of the lever main body (25, 64) for pushing and moving the piston (12, 48) through the push rod (6, 45);
a bracket half body (9, 46a) provided on and projected from the cylinder body (7, 46);
another half-divisional-body bracket (10, 49), the bracket half body (9, 46a) and the half-divisional-body bracket (10, 49) being adapted to be fastened together by a bolt and to hold and to be mounted on the handlebar;
a pair of upper and lower lever holders (22, 46b) extended from the cylinder body (7, 46); and
a union boss portion (61) having a union hole (60)opened up therein and projectingly formed in the cylinder body (7, 46); **characterized by**
a stop lamp switch (31, 62) disposed on the cylinder body (7, 46); and
electrically energizing connectors (62c) projecting from one end of the stop lamp switch (31, 62),
the knocker (26, 65) comprising a switch press portion (26e, 65f) for actuating an operation piece (31a, 62b) of the stop lamp switch (31, 62) with the rotation of the operation lever (5, 44); and
the projecting ends of the electrically energizing connectors (62c) being inclined with respect to the center axis (C) of the cylinder body (7, 46) so as to face away from the cylinder body thereby to prevent from interfering with the union boss portion (61) and/or the bracket half body (9, 46a).

2. A hydraulic master cylinder apparatus for a vehicle with a handlebar as set forth in claim 1, wherein the switch press portion (26e, 65f) is extended from a stopper (26c, 65c) contactable with the cylinder body (7, 46) to thereby restrict the retreating limit of the knocker (26, 65).

3. A hydraulic master cylinder apparatus for a vehicle with a handlebar as set forth in claim 1 or 2, further comprising:
a grip margin adjust mechanism (29) interposed between the lever main body (25, 64) and the knocker (26, 65), the grip margin adjust mechanism (29) including an adjuster (30, 66) rotatably disposed on the recessed portion (25d, 64c) formed in the lever main body (25, 64) and the contact surface (26, 65g) of the knocker (26, 65) with which a cam portion (30a) formed in the leading end portion of the adjuster (30, 66) being contacted.

4. A hydraulic master cylinder apparatus for a vehicle with a handlebar as set forth in claim 1, wherein the lever main body and the knocker are integrally formed.

## Patentansprüche

1. Vertikale hydraulische Hauptzylindervorrichtung für ein Fahrzeug mit einer Griffstange (2) umfassend:
einen Hauptzylinder (4, 43), der einen Zylinderkörper (7, 46), umfassend eine Zylinderöffnung (8, 47), aufweist, wobei der Zylinderkörper (7, 46) eine Zentrumsachse (C) aufweist, wobei der Zylinderkörper so anzuordnen ist, dass sich die Zentrumsachse (C) in einer Richtung im Wesentlichen in rechten Winkeln zu einer virtuellen Linie (B), die durch die Zentrumsachse (A) der Griffstange (2, 42) durchläuft, erstreckt;
einen Betriebshebel (5, 44), der drehbar an dem Zylinderkörper (7, 46) mittels eines Gelenks (24, 59) gelagert ist;
ein Gestänge (6, 45), das zwischen dem Betriebshebel (5, 44) und einem Kolben (12, 48), der an dem Hauptzylinder (4, 43) vorgesehen ist, zwischengestellt ist, wobei der Betriebshebel (5, 44) in einen Hebelhauptkörper (25, 64), der drehbar an dem Gelenk (24, 59) unterstützt ist und außerhalb eines Griffs (3, 50) anzuordnen ist, der an dem Endabschnitt der Griffstange (2, 42) bezüglich eines Fahrzeugkörpers angebracht ist, und einen Klopfer (26, 64) unterteilt ist, der zwischen dem Hebelhauptkörper (25, 64) und dem Zylinderkörper (7, 46) und rotierbar um das Gelenk (24, 59) wegen des Greifbetriebs des Hebelhauptkörpers (25, 64) zum Drücken und Bewegen des Kolbens (12, 48) durch das Gestänge (6, 45) zwischengestellt ist;
einen Klammerhalbkörper (9, 46a), der an dem Zylinderkörper (7, 46) vorgesehen ist und von diesem hervor steht;
eine weitere Halbteilkörper-Klammer (10, 49), wobei der Klammerhalbkörper (9, 46a) und die Halbteilkörper-Klammer (10, 49) angepasst sind, um mittels eines Bolzens zusammen befestigt zu sein und an der Griffstange angebracht zu sein;
ein Paar oberer und unterer Hebelhalter (22, 46b), die von dem Zylinderkörper (7, 46) erweitert sind; und
einen Verbundnabenabschnitt (61), der eine sich darin öffnende Verbundöffnung (60) aufweist und hervorstehend in dem Zylinderkörper (7, 46) ausgebildet ist; **dadurch kennzeichnet, dass**
ein Bremslichtschalter (31, 62) an dem Zylinderkörper (7, 46) angeordnet ist; und
elektrisch antreibende Verbinder (62c) von einem Ende des Bremslichtschalters (31, 62) hervorstehen,
wobei der Klopfer (26, 65) einen Schalterdruckabschnitt (26e, 65f) zum Betätigen eines Betriebsteils (31a, 62b) des Bremslichtschalters (31, 62) mit der Drehung des Betriebshebels (5, 44) umfasst; und
wobei die hervorstehenden Enden der elektrisch antreibenden Verbinder (62c) bezüglich der Zentrumsachse (C) des Zylinderkörpers (7, 46) so geneigt sind, dass sie von dem Zylinderkörper abgewandt sind, um **dadurch** einer störenden Beeinflussung mit dem Verbundnabenabschnitt (61) und/oder dem Klammerhalbkörper (9, 46a) vorzubeugen.

2. Hydraulische Hauptzylindervorrichtung für ein Fahrzeug mit einer Griffstange nach Anspruch 1, **dadurch gekennzeichnet, dass** sich der Schalterdruckabschnitt (26e, 65f) von einem Anschlag (26c, 65c), der mit dem Zylinderkörper (7, 46) in Kontakt stehbar ist, erstreckt, um **dadurch** die Rückzugsgrenze des Klopfers (26, 65) zu beschränken.

3. Hydraulische Hauptzylindervorrichtung für ein Fahrzeug mit einer Griffstange nach Anspruch 1 oder 2, ferner umfassend:
einen Griffbegrenzungsanpassungsmechanismus (29), der zwischen dem Hebelhauptkörper (25, 64) und dem Klopfer (26, 65) zwischengestellt ist, wobei der Griffbegrenzungsanpassungsmechanismus (29) einen Anpasser (30, 66), der drehbar an dem ausgesparten Abschnitt (25d, 64c), der in dem Hebelhauptkörper (25, 64) ausgebildet ist, angeordnet ist und die Kontaktoberfläche (26, 65g) des Klopfers (26, 65) enthält, mit dem ein Nockenabschnitt (30a), der in dem führenden Endbereich des Anpassers (30, 66) ausgebildet ist, in Kontakt steht.

4. Vertikale hydraulische Hauptzylindervorrichtung für ein Fahrzeug mit einer Griffstange nach Anspruch 1, **dadurch gekennzeichnet, dass** der Hebelhauptkörper und der Klopfer integral ausgebildet sind.

## Revendications

1. Dispositif de maître-cylindre hydraulique vertical pour véhicule ayant un guidon (2) comprenant:
un maître-cylindre (4, 43) ayant un corps (7, 46) de cylindre comprenant un trou (8, 47) de cylindre, le corps (7, 46) de cylindre ayant un axe (C) central, dans lequel le corps de cylindre devra être agencé de telle manière que l'axe (C) central s'étende selon une direction en substance à angle droit par rapport à une ligne (B) virtuelle passant à travers l'axe central du guidon (2, 42);
un levier (5, 44) d'actionnement supporté en pouvant pivoter sur le corps (7, 46) de cylindre par un pivot (24, 59);
une tige (6, 45) de poussée intercalée entre le levier (5, 44) d'actionnement et un piston (12,48) prévu dans le maître-cylindre (4, 43), le levier (5, 44) d'actionnement étant divisé en un corps principal (25, 64) du levier supporté en pouvant pivoter sur le pivot (24, 59) et devant être agencé du côté extérieur d'une poignée (3, 50) montée à la partie d'extrémité du guidon (2, 42) par rapport au corps du véhicule, et un poussoir (26, 65) intercalé entre le corps principal (25, 64) du levier et le corps (7, 46) de cylindre et pouvant tourner autour du pivot (24, 59) à cause de l'opération de serrage du corps principal (25, 64) du levier pour pousser et déplacer le piston (12, 48) via la tige (6, 45) de poussée;
un demi-corps (9, 46a) de bride prévu sur et se projetant à partir du corps (7, 46) de cylindre;
une autre bride (10, 49) du corps partagé en deux, le demi-corps (9, 46a) de bride et la bride (10, 49) du corps partagé en deux étant agencés pour être assemblés ensemble par une vis et pour tenir et être montés sur le guidon;
une paire de supports (22, 46b) supérieur et inférieur du levier s'étendant à partir du corps (7, 46) de cylindre; et
une partie (61) à bossage de liaison ayant un trou (60) de liaison y ouvert et formé de manière à faire saillie sur le corps (7, 46) de cylindre; **caractérisé par**
un interrupteur (31, 62) de lampe de stop placé sur le corps (7, 46) de cylindre; et
des connecteurs (52c) de mise sous tension électrique étant en saillie à une extrémité de l'interrupteur (31, 62) de la lampe de stop,
le poussoir (26, 65) comprenant une partie (26e, 65f) d'appui sur l'interrupteur pour actionner un organe (31a, 62b) de commande de l'interrupteur (31, 62) de la lampe de stop par la rotation du levier (5, 44) d'actionnement; et
les extrémités en saillie des connecteurs (52c) de mise sous tension électrique étant inclinées par rapport à l'axe (C) central du corps (7, 46) de cylindre de manière à regarder vers l'extérieur du corps de cylindre évitant ainsi d'interférer avec la partie (61) du bossage de liaison et/ou le demi-corps (9, 46a) de bride.

2. Dispositif de maître-cylindre hydraulique pour véhicule ayant un guidon comme présenté à la revendication 1, dans lequel la partie (26e, 65f) d'appui sur l'interrupteur s'étend à partir d'un arrêt (26c, 65c) pouvant être mis en contact avec le corps (7, 46) de cylindre pour ainsi restreindre la limite de recul du poussoir (26, 65).

3. Dispositif de maître-cylindre hydraulique pour véhicule ayant un guidon comme présenté à la revendication 1 ou 2, comprenant en outre:
un mécanisme (29) de réglage de la course de la poignée intercalé entre le corps (25, 64) principal du levier et le poussoir (26, 65), le mécanisme (29) de réglage de la course de la poignée incluant une molette (30, 66) de réglage placée en pouvant tourner sur la partie (25d, 64c) en creux formée dans le corps principal (25, 64) du levier et la surface (26, 65g) de contact du poussoir (26, 65) avec lequel est en contact une partie (30a) de came formée dans la partie d'extrémité d'attaque de la molette (30, 66) de réglage.

4. Dispositif de maître-cylindre hydraulique pour véhicule ayant un guidon comme présenté à la revendication 1, dans lequel le corps principal du levier et le poussoir sont formés de manière intégrée.
